# EUROPEAN PATENT SPECIFICATION

(11) **EP 3 742 011 B1**
(45) Date of publication and mention of the grant of the patent: **14.08.2024**
(21) Application number: 19176393.7
(22) Date of filing: 24.05.2019
(51) Int. Cl.: F16C 23/04, F16C 33/20, F16C 11/06, F16C 17/02

(54) **LINER WITH IMPROVED RESISTANCE TO WEAR AND PLAIN BEARING COMPRISING SUCH A LINER**
AUSKLEIDUNG MIT VERBESSERTER VERSCHLEISSFESTIGKEIT UND GLEITLAGER MIT SOLCH EINER AUSKLEIDUNG
REVÊTEMENT PRÉSENTANT UNE MEILLEURE RÉSISTANCE À L'USURE ET PALIER LISSE COMPRENANT UN TEL REVÊTEMENT

(43) Date of publication of application: 25.11.2020
(73) Proprietor: Aktiebolaget SKF, 415 50 Göteborg (SE)
(72) Inventor: Colton, Michael, Bristol, BS70HQ (GB); Dennis, Grant, Pontypridd, CF38 2DD (GB); Woodhead, Johnpaul, Bristol, BS49 4AY (GB)
(74) Representative: Schonecke, Mitja

(56) References cited:
- EP-A1- 2 905 487
- EP-A1- 2 955 399
- EP-A1- 2 955 400
- JP-A- S5 774 153
- US-A1- 2004 008 914
- US-A1- 2015 093 066

## Description

### Technical field of the invention

The present invention relates to the field of liners.

The present invention also relates to the field of plain bearings, in particular spherical plain bearings for aerospace applications.

### Background Art

It is known from US2015/0093066A1 to dispose a sliding layer onto a metallic substrate.

It is known from US2004/0008914A1 to dispose a sliding layer onto a metallic substrate of a plain bearing, the layer comprising hard particles made of e.g. alumina for the improvement of the wear of the layer.

Liners are commonly used to lubricate a contact between two parts in relative sliding motion and to reduce the wear of the parts.

It is known to use liners in plain bearings.

It is known from EP2955400A1 and EP2955399A1 to provide a bearing liner with lubricating fibers and structural fibers.

The life of the bearing is unfortunately usually limited by the life of the liner. Improvements are possible.

### Summary of the invention

It is an object of the present invention to provide a liner which comprises a binder comprising a resin material, a wowen fabric comprising a structural yarn and a first lubricating yarn so that the wowen fabric is embedded inside the binder.

According to the invention, the liner further comprises particles of Al₂O₃, a first side (10) and an opposite second side (11).

Still according to the invention, the liner further comprises a pre-preg which is distinct from the wowen fabric and which is disposed on the first side of the liner.

Thanks to the invention, the wear of the liner is reduced, and its life is increased.

According to other aspects of the invention which are advantageous but not compulsory, such a liner may incorporate one or several of the following features:
- the matrix comprises particles of Al₂O₃,
- the liner comprises a second lubricating yarn containing particles of Al₂O₃,
- the first and the second lubricating yarns comprise particles of PTFE and/or graphite and/or graphene.

It is another object of the invention to provide a plain bearing with an outer ring, an inner ring and a liner according to the invention. The inner ring has an outer surface and the outer ring has an inner surface such that the liner is interposed between the outer surface and the inner surface.

According to other aspects of the invention which are advantageous but not compulsory, such a plain bearing may incorporate one or several of the following features:
- the plain bearing is a spherical plain bearing,
- the plain bearing is an aerospace plain bearing,
- the liner is fixed on the inner surface of the outer ring,
- the outer surface of the inner ring is made from ceramic material,
- the entire inner ring is made from ceramic material.

### Brief description of the drawings

The present invention and its advantages will be better understood by studying the detailed description of specific embodiments given by way of non-limiting examples and illustrated by the appended drawings on which:
- figure 1 shows a preferred embodiment of a plain bearing according to the invention and comprising a liner according to the invention;
- figure 2 shows in detail the structure of a liner according to the invention;
- figures 3 shows the result of a wear test performed on a prior art liner and a liner according to the invention.

### Detailed description

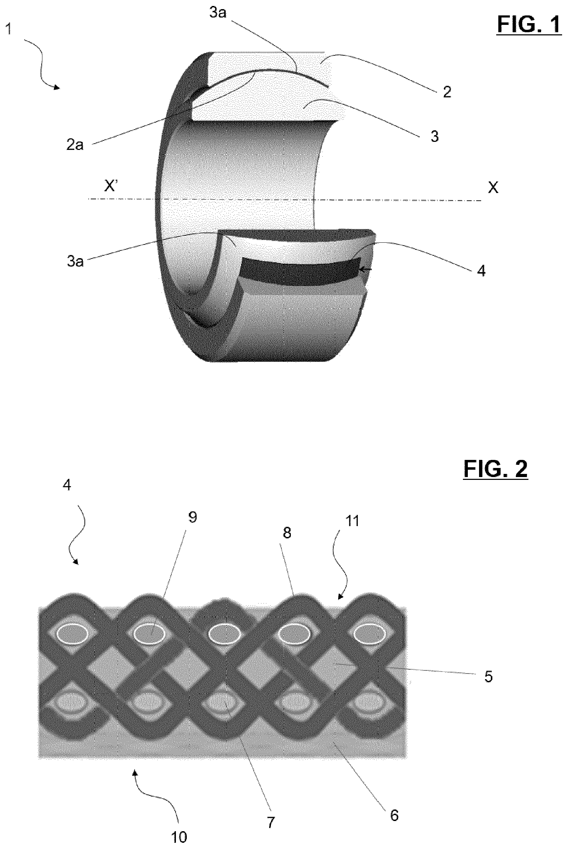

Fig. 1 illustrates a plain bearing 1 comprising an outer ring 2 and an inner ring 3. Both rings are symmetrical around an axis XX'. The outer ring 2 has, on its inner periphery, an inner surface 2a, and the inner ring has, on its outer periphery, an outer surface 3a. The inner and outer surfaces are facing each other, and a liner 4 is interposed there between.

With reference made to figure 2, the liner 4 is a composite self-lubricating liner and is in the form of a sheet with a first side 10 and an opposite second side 11.
the liner 4 comprises a binder or matrix 5 which comprises a resin.

In a preferred embodiment of the invention, the resin is of the epoxy or phenolic type.

The liner 4 also comprises a woven fabric which is embedded partly or totally inside the binder. The woven fabric comprises a structural warp yarn 7 and a first lubricating warp yarn 8.

By yarn it is intended not only a single yarn or fiber, but also a plurality of individual yarns or fibers.

The structural yarn 7 and the first lubricating yarn 8 are wrapped around each other.

In a preferred embodiment of the invention, the structural yarn 7 is made of at least one of glass, carbon, aramid, PEEK, polyester, polyamide, PPS or aramid.

In a preferred embodiment of the invention, the first lubricating yarn 8 is made of PTFE or graphite or graphene. Any other solid lubricant may be advantageously used.

The liner further comprises a pre-preg 6 embedded in the binder 5. The pre-preg 6 is disposed on the first side 10 of the liner 4. The pre-preg is partly or entirely embedded inside the binder.

The liner is attached to one of the outer surface 3a of the inner ring 3 and the inner surface 2a of the outer ring 2. Appropriate attachment means such as overmolding of the resin of the binder and/or gluing are used.

In a preferred embodiment of the invention, the liner 4 is attached to the inner surface 2a of the outer ring a of the plain bearing 1.

The second surface 11 of the liner 4 is intended for sliding against the one of the rings onto which the liner is not attached.

Advantageously, the first lubricating yarn 8 is partly embedded inside the binder 5 so that it partly protrudes from the binder and can be in direct contact with said one of the rings.

Furthermore, the liner comprises particles of Al₂O₃.

In a preferred embodiment of the invention, the particles of Al₂O₃ are embedded inside the binder.

In another preferred embodiment of the invention, the woven fabric of the liner comprises a second lubricating yarn 9 which comprises particles of Al₂O₃. Advantageously, the second lubricating yarn 9 comprises yarn of PTFE or graphite or graphene impregnated with particles of Al₂O₃.

In another preferred embodiment of the invention, particles of Al₂O₃ are embedded inside the binder and inside a second lubricating yarn 9.

The structural yarn, the first lubricating yarn and the second lubricating yarn are wrapped around each other.

In use, when the rings of the plain bearing slide with respect to each other, the liner wears out. Thanks to the particles of Al₂O₃ the speed of the wear of the liner is reduced.

In a preferred embodiment of the invention, the rings of the plain bearing are metallic.

In another preferred embodiment of the invention, at least one of the rings comprises ceramic material.

Advantageously, the surface of the ring which slides against the liner is made of ceramic material. For instance, a coating of ceramic material is applied onto a metallic ring.

Alternatively, the entire ring of the plain bearing which slides against the liner is made of ceramic material.

In the illustrated preferred embodiment of the invention, the plain bearing is a spherical plain bearing of which the inner surface of the outer ring is spherical and so is the outer surface of the inner ring.

In a preferred embodiment of the invention, the plain bearing is an aerospace plain bearing.

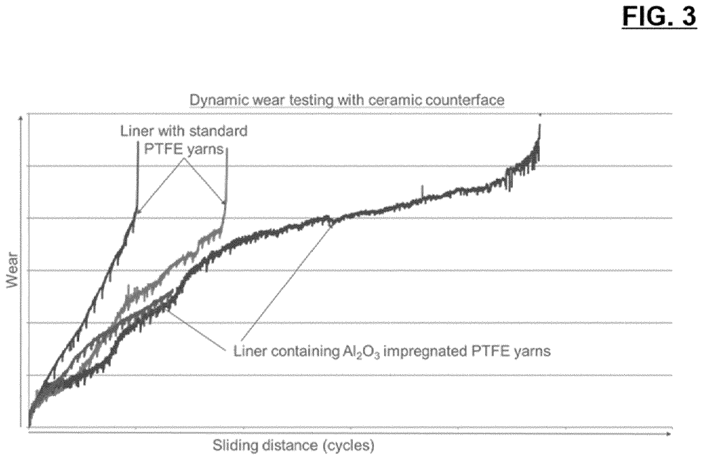

Figure 3 illustrates the result of a dynamic wear test performed on a liner of the prior art and a liner according to the invention.

The liner according to the invention has PTFE yarn impregnated with Al₂O₃.

The liner of the prior art differs from the liner according to the invention in that it doesn't comprise particles of Al₂O₃.

The wear test has been performed by sliding the liners against a counterface made of different materials including metals and ceramics.

Surprisingly, the inventors have noticed that the liner according to the invention performs outstandingly with respect to the prior art liner when the counterface is made of ceramic material.

Thanks to the invention, the life of the liner is increased, and therefore also the life of the plain bearing.

### Nomenclature

XX' axis
1 plain bearing
2 outer ring
2a inner surface
3 inner ring
3a outer surface
4 liner
5 binder
6 pre-preg
7 structural yarn
8 first lubricating yarn
9 second lubricating yarn
10 first side
11 second side

## Claims

1. Liner (4) comprising :
- A first side (10) and an opposite second side (11),
- A binder (5) comprising a resin material,
- A woven fabric comprising a structural yarn (7) and a first lubricating yarn (8) and being embedded inside the binder,
- A pre-preg (6) which is at least partly embedded in the binder (5), distinct from the woven fabric and which is disposed on the first side (10) of the liner, and
- particles of Al₂O₃,
**characterized in that** the liner further comprises a second lubricating yarn (9) containing particles of Al₂O₃.

2. Liner according to claim 1, **characterized in that** the binder comprises particles of Al₂O₃.

3. Liner according to claim 1, **characterized in that** in the first and second lubricating yarns comprise particles of PTFE and/or graphite and/or graphene.

4. Plain bearing (1) comprising:
- an outer ring (2) with an inner surface (2a),
- an inner ring (3) with an outer surface (3a),
the rings being symmetrical around an axis (XX'),
- a liner according to any preceding claim interposed between the inner surface of the outer ring and the outer surface of the inner ring.

5. Plain bearing according to claim 4, **characterized in that** it is a spherical plain bearing.

6. Plain bearing according to claim 4 or 5, **characterized in that** it is an aerospace plain bearing.

7. Plain bearing according to any of the claims 4 to 6, **characterized in** the liner is fixed on the inner surface of the outer ring.

8. Pain bearing according to claim 7, **characterized in that** the outer surface of the inner ring is made from ceramic material.

9. Plain bearing according to claim 7, **characterized in that** the entire inner ring is made from ceramic material.

## Patentansprüche

1. Auskleidung (4) umfassend:
- eine erste Seite (10) und eine gegenüberliegende zweite Seite (11),
- ein Bindemittel (5), das ein Harzmaterial umfasst,
- ein Gewebe, das ein Strukturgarn (7) und ein erstes Schmiergarn (8) umfasst und innerhalb des Bindemittels eingebettet ist,
- ein Prepreg (6), das zumindest teilweise in das Bindemittel (5) eingebettet ist und von dem Gewebe verschieden ist und das auf der ersten Seite (10) der Auskleidung angeordnet ist, und
- Teilchen von Al₂O₃,
**dadurch gekennzeichnet, dass** die Auskleidung ferner ein zweites Schmiergarn (9) umfasst, das Teilchen von Al₂O₃ enthält.

2. Auskleidung nach Anspruch 1,
**dadurch gekennzeichnet, dass** das Bindemittel Teilchen von Al₂O₃ umfasst.

3. Auskleidung nach Anspruch 1, **dadurch gekennzeichnet, dass** das erste und das zweite Schmiergarn Teilchen von PTFE und/oder Graphit und/oder Graphen umfassen.

4. Gleitlager (1) umfassend:
- einen äußeren Ring (2) mit einer inneren Oberfläche(2a),
- einen inneren Ring (3) mit einer äußeren Oberfläche (3a),
wobei die Ringe symmetrisch um eine Achse (XX') sind,
- eine Auskleidung nach einem der vorstehenden Ansprüche, die zwischen der inneren Oberfläche des äußeren Rings und der äußeren Oberfläche des inneren Rings liegt.

5. Gleitlager nach Anspruch 4, **dadurch gekennzeichnet, dass** es ein kugelförmiges Gleitlager ist.

6. Gleitlager nach Anspruch 4 oder 5, **dadurch gekennzeichnet, dass** es ein Luftfahrtgleitlager ist.

7. Gleitlager nach einem der Ansprüche 4 bis 6, **dadurch gekennzeichnet, dass** die Auskleidung an der inneren Oberfläche des äußeren Rings befestigt ist.

8. Gleitlager nach Anspruch 7, **dadurch gekennzeichnet, dass** die äußere Oberfläche des inneren Rings aus Keramikmaterial hergestellt ist.

9. Gleitlager nach Anspruch 7, **dadurch gekennzeichnet, dass** der gesamte innere Ring aus Keramikmaterial hergestellt ist.

## Revendications

1. Revêtement (4) comprenant :
- un premier côté (10) et un second côté (11) opposé,
- un liant (5) comprenant un matériau de résine,
- un tissu comprenant un fil structurel (7) et un premier fil lubrifiant (8) et étant noyé à l'intérieur du liant,
- un préimprégné (6) qui est au moins partiellement noyé dans le liant (5), distinct du tissu et qui est disposé sur le premier côté (10) du revêtement, et
- des particules d'Al₂O₃,
**caractérisé en ce que** le revêtement comprend en outre un second fil lubrifiant (9) contenant des particules d'Al₂O₃.

2. Revêtement selon la revendication 1, **caractérisé en ce que** le liant comprend des particules d'Al₂O₃.

3. Revêtement selon la revendication 1, **caractérisé en ce que** les premier et second fils lubrifiants comprennent des particules de PTFE et/ou graphite et/ou graphène.

4. Palier lisse (1) comprenant :
- une bague externe (2) dotée d'une surface interne (2a),
- une bague interne (3) dotée d'une surface externe (3a),
les bagues étant symétriques autour d'un axe (XX'),
- un revêtement selon l'une quelconque revendication précédente interposé entre la surface interne de la bague externe et la surface externe de la bague interne.

5. Palier lisse selon la revendication 4, **caractérisé en ce qu'**il s'agit d'un palier lisse sphérique.

6. Palier lisse selon la revendication 4 ou 5, **caractérisé en ce qu'**il s'agit d'un palier lisse pour l'aérospatiale.

7. Palier lisse selon l'une quelconque des revendications 4 à 6, **caractérisé en ce que** le revêtement est fixé sur la surface interne de la bague externe.

8. Palier lisse selon la revendication 7, **caractérisé en ce que** la surface externe de la bague interne est réalisée en matériau céramique.

9. Palier lisse selon la revendication 7, **caractérisé en ce que** la totalité de la bague interne est réalisée en matériau céramique.
